(19) Europäisches Patentamt
European Patent Office
Office européen des brevets

(11) **EP 3 889 896 A1**

(12) **EUROPEAN PATENT APPLICATION**

(43) Date of publication:
06.10.2021 Bulletin 2021/40

(51) Int Cl.:
*G06T 7/149* (2017.01)

(21) Application number: **20167664.0**

(22) Date of filing: **02.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **SABCZYNSKI, Jörg**
5656 AE Eindhoven (NL)
• **WIEMKER, Rafael**
5656 AE Eindhoven (NL)
• **KLINDER, Tobias**
5656 AE Eindhoven (NL)

(74) Representative: **Philips Intellectual Property &
Standards
High Tech Campus 5
5656 AE Eindhoven (NL)**

(54) **MODEL-BASED VIRTUAL CLEANSING FOR SPECTRAL VIRTUAL COLONOSCOPY**

(57) The present invention relates to assessing the relative contribution of different tissues, or tissue mix. A method is proposed that is based on models of material transitions. The proposed method may be extended to take into account additional information available in increasingly used spectral CT or multi-parametric MRI. Different material concentration maps can be created, which can be used for improved visualization.

Fig. 1

EP 3 889 896 A1

**Description**

FIELD OF THE INVENTION

The present invention relates to assessing the relative contribution of different tissues in a medical object data set, and in particular to a computer-implemented method and an apparatus for processing image voxel data representative of at least one three-dimensional medical image of an imaging modality of an object of interest to classify transitions between at least two materials in the object of interest, to a medical imaging system as well as a computer program element and a computer readable medium.

BACKGROUND OF THE INVENTION

Tissue mix is known in the art, for example from "Partial Volume Tissue Segmentation using Grey-Level Gradient", D. C. Williamson, N. A. Thacker, S. R. Williams and M. Pokric, presented at MIUA 2002, which discloses a method for its calculation. The calculation of tissue mix may be used to solve the problem of partial volume effect, which is the misclassification of CT (Computed Tomography) value in a voxel occurring at a boundary between different tissue types due to the contributions to that voxel from unknown proportions of surrounding tissue. The problem may occur whenever different tissues or materials meet at a boundary such as between bone and soft tissue, but may also occur between regions of air and tissue in e.g. the colon, and also between combinations such as air, liquid and different types of tissue.

For example, in virtual colonoscopy, the colon consists of many haustra, i.e. pouches that are often separated only by very thin walls with a thickness sometimes even thinner than the scanner resolution. Therefore, partial volume effects during Virtual Cleansing may lead to a misinterpretation of voxels containing a wall between haustra as air. This may lead to holes in the rendered image of the colon.

SUMMARY OF THE INVENTION

There may be a need to provide an improved method to calculate tissue mix. The object of the present invention is solved by the subject-matter of the independent claims, wherein further embodiments are incorporated in the dependent claims. It should be noted that the following described aspects of the invention apply also for the method, the apparatus, the medical imaging system, the computer program element, and the computer readable medium.

According to a first aspect of the present invention, there is provided a computer-implemented method for processing image voxel data representative of at least one three-dimensional medical image of an imaging modality of an object of interest to classify transitions between at least two materials in the object of interest. The computer-implemented method comprises:

a) selecting a local environment around a voxel in the image voxel data;
b) fitting a material transition model to image intensities of the local environment of the voxel to estimate model parameters of the material transition model and to derive one or more quantities for characterizing a fitting quality of the model fit for the voxel, wherein the material transition model is constructed that corresponds to a behavior of the image intensities at material transitions;
c) determining whether a valid fitting result is achieved for the voxel based on at least one of the one or more derived quantities and the model parameters;
d) classifying the voxel into one type of material transitions based on the estimated model parameters, if a valid fitting result is achieved for the voxel; or classifying the voxel into one of the at least two materials based on the estimated model parameters, if an invalid fitting result is achieved for the voxel; and
e) repeating steps a) to d) for a plurality of voxels in the image voxel data.

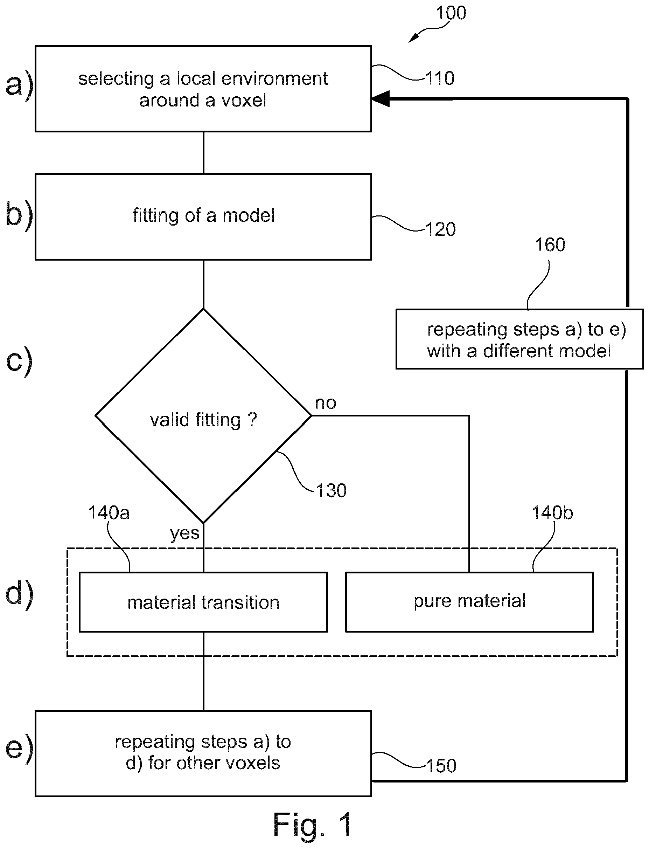

In other words, it is proposed to take into account the appearance of material transitions between discrete pure material classes in medical images by using a mathematical model. The mathematical model (e.g. two-material transition model or three-material transition model) allows a local, non-linear fit of pure materials (e.g. air, tissue, tagged faeces, bone) and their respective transitions. An exemplary two-material transition model is described in detail with respect to the embodiment illustrated in Fig. 1 of the present disclosure. In addition, it is checked whether the fitting procedure produced valid values based on the estimated model parameters and/or the fitting quality. In other words, it is checked whether the values comply with "logical rules", such as "voxels far away from a wall should not contribute much to the model and should result in a pure value". This may reduce the chances of misinterpreting voxels containing a pure material as the material transitions, and *vice versa*.

The proposed method may be used with standard CT, MRI (Magnetic Resonance Imaging), or CBCT (Cone Beam Computed Tomography), but also may be extended to spectral CT or multi-parametric MRI. As the proposed method has the potential to better assess the relative contribution of different tissues in the medical object data set, less artefacts may be produced in the rendering. This may improve the certainty during reading and the value of virtual rendering.

The method may comprise the following steps:

Fitting of a model: A two-material transition model is fitted to the image intensities of an environment around the voxel. For example, Hounsfield units may represent image intensities in CT imaging.

Determining results from the fitting of results: Model parameters and quantities representative for the fitting quality of the model fit are estimated. Examples of the quantity for characterizing the fitting quality may include, but not limited to, optimality, residual, fitting success, tolerance of the result.

Filtering of fitting quality: It is checked whether the fitting procedure produced valid values based on the estimated model parameters and/or the fitting quality. If the fitting procedure produced valid values, the voxel is classified into one of the material transitions. If not, the voxel is classified into one of the pure materials.

Repeating the above-mentioned steps for a plurality of voxels.

According to an embodiment of the present invention, at least two material transition models are applied to the plurality of voxels in the image voxel data.

Examples of the material transition models may include, but are not limited to, two-material transition, three-material transition, thin-wall embedded in another material, two-material-transition with a thin film of a third material, etc. It may be beneficial do the calculation as described for a given voxel i for all these models and select the best one. It may be beneficial do the calculation as described for a given voxel for all these models and select the best one.

According to an embodiment of the present invention, the computer-implemented method further comprises:

- determining a respective concentration value for each of the plurality of voxels (i) based on the classified material transition, if a valid fitting result is achieved for the respective voxel, or (ii) based on the classified material, if an invalid fitting result is achieved for the respective voxel; and
- creating at least one concentration image for the at least two materials based on the determined concentration values of the plurality of voxels.

In other words, the concentration maps for one or more pure materials may be calculated.

As the proposed method has the potential to better assess the relative contribution of different tissues in the medical object data set, less artefacts may be produced in the rendered concentration image(s).

According to an embodiment of the present invention, the plurality of voxels are voxels that are likely to be close to a material transition area.

In order to reduce the computational effort for fitting, the fitting procedure may be started only for those voxels, which are likely to be close to the material transition area. The material transition area may be determined e.g. by image segmentation.

According to an embodiment of the present invention, the imaging modality comprises computed tomography (CT).

The proposed method may be used with standard CT as well as spectral CT.

According to an embodiment of the present invention, the at least one three-dimensional medical image comprises synthesized monoenergetic images acquired at different energies. The behavior of the image intensities at material transitions in each of the synthesized monoenergetic images is modelled by a respective material transition model. Each material transition model has same geometric parameters.

Making use of the additional information from the spectral acquisition may result in improved estimation of material transition.

For spectral CT, each spectral image may have a respective model function. The material parameters of the model functions are different for each of the spectral images, while the geometric parameters are the same. The model fitting is done to optimize to the matching of the model functions with all the spectral images simultaneously.

According to an embodiment of the present invention, the imaging modality comprises magnetic resonance (MR) imaging.

In other words, the proposed method may also be extended to MRI, such as standard MRI or multi-parametric MRI.

According to an embodiment of the present invention, the at least one three-dimensional medical image comprises a sequence of multi-parametric MR images. The behavior of the image intensities at material transitions in each of the multi-parametric MR images is modelled by a respective material transition model. Each material transition model has same geometric parameters.

Multi-parametric (mp) MRI is essentially any functional form of imaging used to supplement standard anatomical T1 and T2-weighted imaging. The functional sequences of choice may include, but are not limited to, dynamic contrast-enhanced (DCE) MRI and diffusion-weighted imaging (DWI), including the calculation of apparent diffusion coefficient (ADC) maps.

For multi-parametric MRI, each of the multi-parametric MR images may have a respective model function. The material parameters of the model functions are different for each of the multi-parametric MR images, while the geometric parameters are the same. The model fitting is done to optimize to the matching of the model functions with all the multi-parametric MR images simultaneously.

According to an embodiment of the present invention, the computer-implemented method further comprises removing effects of an undesired material of the at least two materials from the image voxel data based on a result of classification.

In other words, an undesired material, e.g. tagged faeces may be replaced by another material, e.g. air. The voxels corresponding to the undesired material (e.g. tagged faeces) need to be identified and their concentration values need to be replaced by the values of another material (e.g. air).

In an example, for the clinical inspection of the colon in virtual colonoscopy, remains of stool or faeces may be removed from the colon image prior to visualization.

According to an embodiment of the present invention, at least one of the following images is created: a model parameter image illustrative of the model parameters, a fitting quality image illustrate of the one or more derived quantity characterizing the fitting quality of the model fit, and one or more concentration images.

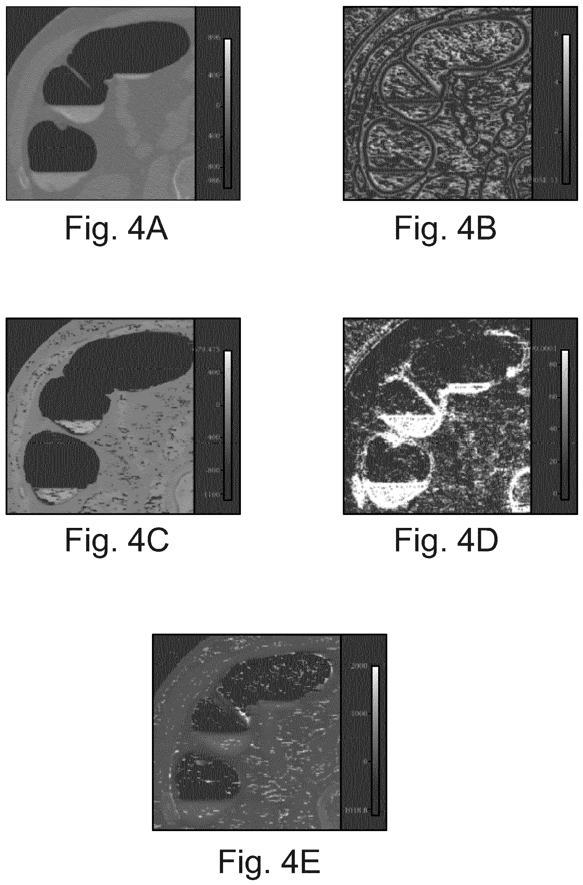

In other words, one or more images created by the proposed method, such as model parameter images, fitting quality images, derived quantity images, may be used to color the resulting surface mesh in order to visualize more information to the user. This will be explained hereafter and particularly with respect to the embodiment illustrated in Figs. 4A to 4E of the present disclosure.

According to an embodiment of the present invention, the computer-implemented method further comprises visualizing at least one of the created images.

According to an embodiment of the present invention, the object of interest comprises a colon. The at least two materials comprise gas, stool tagged with stool tagging agent, and tissue.

In other words, the proposed method may be applied to virtual colonoscopy.

According to a second aspect of the present invention, there is provided an apparatus that comprises a processor configured to perform the method according to the first aspect and any associated embodiment.

According to a third aspect of the present invention, there is provided a medical imaging system. The medical imaging system comprises:

- a scanner configured to scan an object of interest to acquire at least one three-dimensional image of the object of interest; and
- an apparatus according to the second aspect and any associated embodiment for processing image voxel data representative of the at least one three-dimensional image.

In an example, the scanner is a CT scanner.

In another example, the scanner is an MRI scanner.

In a further example, the scanner is a CBCT scanner.

According to a fourth aspect of the present invention, there is provided a computer program element configured, during execution, to perform the method steps according to the first aspect and any associated embodiment.

According to another aspect of the present invention, there is provided a computer readable medium that comprises the computer program element according to the fourth aspect.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the present invention will become apparent from and be elucidated with reference to the embodiments described hereinafter.

BRIEF DESCRIPTION OF THE DRAWINGS

These and other aspects of the invention will be apparent from and elucidated further with reference to the embodiments described by way of examples in the following description and with reference to the accompanying drawings, in which

Fig. 1 shows a flow chart of a computer-implemented method according to some embodiments of the present disclosure.

Fig. 2 schematically shows a two-material transition in vicinity of voxel i.

Fig. 3 shows a two-material function in dependence of location along a line orthogonal to the transition plane.

Fig. 4A shows a CT image of an abdomen.

Fig. 4B shows a distance image representative of the absolute value of the distance obtained after fitting a two-material transition model to the three-dimensional medical image illustrated in Fig. 4A.

Fig. 4C illustrates an image representative of the lower Hounsfield value of the two pure materials obtained after fitting a two-material transition model to the three-dimensional medical image illustrated in Fig. 4A.

Fig. 4D illustrates an image representative of the higher Hounsfield value of the two pure materials obtained after fitting a two-material transition model to the three-dimensional medical image illustrated in Fig. 4A.

Fig. 4E illustrates an optimality image representative of the value of the optimality for characterizing the fitting quality obtained after fitting a two-material transition model to the three-dimensional medical image illustrated in Fig. 4A.

Fig. 5 schematically shows an apparatus according to some embodiments of the present disclosure.

Fig. 6 schematically shows a medical imaging system according to some embodiments of the present disclosure.

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

DETAILED DESCRIPTION OF EMBODIMENTS

In the following, the method is described for an application of a two-material-transition model in a situation with three different classes of materials in the colon. Although the following detailed description is described using application to CT virtual colonoscopy for the purposes of illustration, anyone of ordinary skill in the art will appreciate that the method, apparatus, and medical imaging system described above and below can be adapted to more tissue classes, e.g. bone, and to other imaging modality, e.g. MRI or CBCT. Accordingly, the following described examples are set forth without any loss of generality to, and without imposing limitations upon, the claimed invention.

Polyps in the colon can possibly develop into colon cancer. If removed early, cancer can be prevented effectively. It is therefore recommended also for asymptomatic patients above a certain age to perform endoscopic inspection of the colon (colonoscopy) in order to detect and assess possible polyps. Unfortunately, compliance with this screening is low, mainly due to the discomfort associated with endoscopy. Therefore, non-invasive virtual colonoscopy (VC) based on CT was developed as an alternative. VC is the virtual inspection of the colon wall on a computer screen usually rendered with the help of Volume Rendering (VR) techniques. In VC, VR results in animate impression similar to the view of a real endoscope during colonoscopy. A necessary step for the clinical inspection of the colon in VC is removing remains of stool or faeces from the colon image prior to visualization, so called Virtual Cleansing. Unfortunately, the CT contrast of faeces is similar to the contrast of the tissue surrounding the colon. Therefore, this pre-processing of the image is usually supported by orally administering a laxative to remove stool followed by administering contrast agent containing iodine prior to CT imaging in order to tag remaining stool. This tagging helps removing the remaining faeces from the image. In order to create a visualization of a virtual empty colon, the Hounsfield values of voxels with faeces are set to the value of air.

Virtual cleansing may have some inherent problems and disadvantages in combination with Volume Rendering.

Virtual cleansing methods relying on the assumption that the Hounsfield values of pure materials are known. Usually, it is assumed that there are three different classes of relevant materials in VC: Air, soft tissue, and tagged faeces. Unfortunately, except for air, the Hounsfield values of soft tissue and tagged faeces may vary not only from patient to patient, from CT image to CT image, but also within a single CT image. This is due to natural differences in tissue density as well as variations of the contrast agent concentration in the faeces. Therefore, cleansing methods relying on the knowledge of the Hounsfield values of pure materials often produce artefacts in the rendered images.

Depending on the threshold values for identifying those voxels, which are completely or partially filled with tagged faeces, the apparent position of the colon wall in the rendered image might be different and might not coincide with the real colon wall position. Therefore, even if the material properties of the pure materials were known exactly, voxel-wise rendering methods can produce geometric artefacts at the three-material transitions. In virtual colonoscopy, these appear as "water level" artefacts at the colon wall, where all three pure materials (air, tissue, tagged faeces) meet.

Furthermore, the colon consists of many haustra, i.e. pouches that are often separated only by very thin walls with a thickness sometimes even thinner than the scanner resolution. Therefore, partial volume effects during Virtual Cleansing can lead to a misinterpretation of voxels containing a wall between haustra as air. This leads to holes in the rendered image of the colon.

In order to solve some of the above-mentioned problems, Fig. 1 shows a flow chart of a computer-implemented method 100 according to some embodiments of the present disclosure. The computer-implemented method 100 is proposed for processing image voxel data representative of at least one three-dimensional medical image of an imaging modality of an object of interest to classify transitions between at least two materials in the object of interest. Examples of the imaging modality may include, but are not limited to, CT, MRI, or CBCT.

The method 100 may be implemented as a device, module or related component in a set of logic instructions stored in a non-transitory machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof. For example, computer program code to carry out operations shown in the method 100 may be written in any combination of one or more programming languages, including an object oriented programming language such as JAVA, SMALLTALK, C++ or the like and conventional procedural programming languages, such as the "C" programming language or similar programming languages.

In step 110, i.e. step a), a local environment is selected around a voxel in the image voxel data.

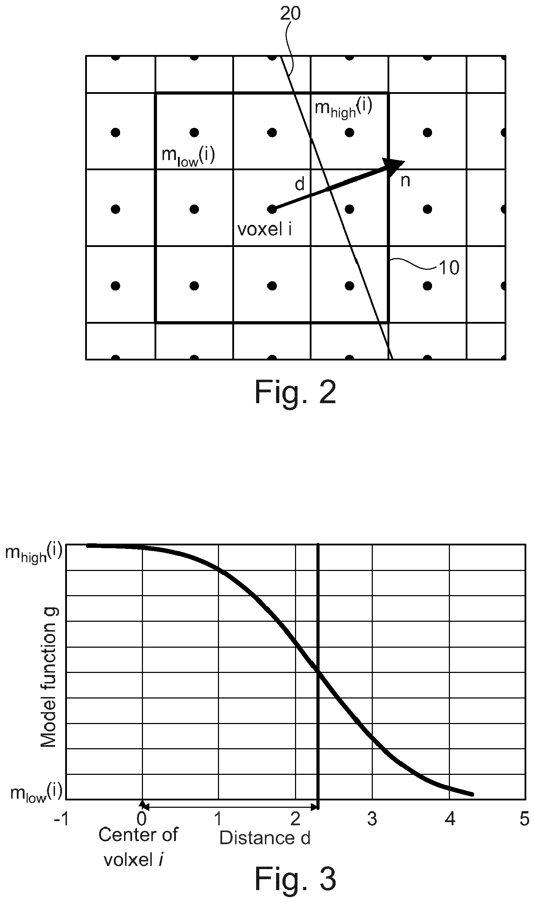

In an example, as illustrated in Fig. 2, the local environment 10 is in form of a cubic sub-image of size $k^3$ with voxel i in the center, where $k$ = 2, 3, 4....

In another example (not shown), the local environment may be in the form of spherical or ellipsoidal sub-image with voxel i in the center.

In step 120, i.e. step b), a material transition model is fitted to image intensities of the local environment of the voxel to estimate model parameters of the material transition model. The material transition model is constructed that corresponds to a behavior of the image intensities at material transitions. Examples of the material transition model may include, but are not limited to, a two-material transition and a three-material transition model.

For illustration purposes, the method will be described below for a two material transition (either air-tissue or air-stool or stool-tissue). It applies similarly to other transitions.

A two-material transition may be modelled by a model function $g(m_{high}, m_{low}, d, \textbf{\textit{n}}, \sigma)$ where $m_{high}$ is the higher and $m_{low}$ the lower Hounsfield value of the two pure materials of the two-material transition. $d$ and $\textbf{\textit{n}}$ are the distance and unit normal vector. $\sigma$ is the width of the point spread function of the scanner. The point spread function of the scanner may be anisotropic. In this case, $\sigma$ may be a vector $\sigma$. The point spread function of the scanner (isotropic or anisotropic) might be known. In this case, it does not need to be estimated and can be fixed in the algorithm.

Different material transition models may be used for different material topologies. It may be beneficial to try several material transition models before selecting one. For the simple case of a planar two-material transition, the only spatial dependence of the model function is from the distance $d(\textbf{\textit{r}})$ of the voxel at position $\textbf{\textit{r}}$ from a transition plane 20 (see Fig. 2):

$$g(\textbf{\textit{r}}) = m_{low} + \left(m_{high} - m_{low}\right)\left(\frac{1}{2} - \frac{1}{2}\operatorname{erf}\frac{d(\textbf{\textit{r}})}{\sqrt{2}\sigma}\right)$$

An example of a two-material model function in dependence of location along a line orthogonal to the transition plane is illustrated in Fig. 3.

From the fit, several important quantities are obtained for the voxel i. The model parameters of the material transition model, e.g. $m_{high}(i)$, $m_{low}(i)$, $d(i)$, n(i), $\sigma$(i) can be obtained by fitting the material transition model to the image intensities of the local environment.

Additionally, one or more quantities are derived for characterizing a fitting quality of the model fit for the voxel. Depending on the fitting method, these may be e.g. optimality, residual, fitting success, tolerance of the result etc. The quantity for characterizing the fitting quality may be obtained from the Meta results of the fitting procedure.

In step 130, i.e. step c), it is determined whether a valid fitting result is achieved for the voxel based on at least one of the one or more derived quantities and the model parameters.

In an example, it may be checked if fitting procedure gave valid values based on distance, $m_{high}(i)$ and $m_{low}(i)$, quantity for characterizing the fitting quality (e.g. optimality, residual, fitting success, tolerance of the result, etc.). For example, for voxels, which are far away from any two-material transition, the model fitting procedure for a two-material transition can give no valid results. For example, for voxels, which have values of $m_{high}$ or $m_{low}$ out of a predefined range, the model fitting procedure for a two-material transition can give no valid results. For example, if the fitting quality, such as optimality, fitting success, etc., is out of a predefined range, the model fitting procedure for a two-material transition can give no valid results. Therefore, these voxels need to be identified and their concentration values need to be replaced by e.g. the values for one of the following pure materials: air, tissue, or faeces.

In step 140a, i.e. step d), if a valid fitting result is achieved for the voxel, the voxel is classified into one type of material transitions (e.g. tissue/gas, gas/tagged material, or tagged material/tissue) based on the estimated model parameters.

In step 140b, if an invalid fitting result is achieved for the voxel, the voxel is classified into one of the at least two materials based on the estimated model parameters. In step 150, i.e. step e), steps a) to d) are repeated for a plurality of voxels in the image voxel data.

In an example, steps a) to d) are repeated for all voxels in the image voxel data.

In an example, steps a) to d) are repeated for part of the voxels in the image voxel data. For example, the plurality of voxels are voxels that are likely to be close to a material transition area. In other words, in order to reduce the computational effort for fitting, the fitting procedure may be started only for those voxels, which are likely to be close to a material transition. Image segmentation may be used to partition the image voxel data into multiple segments to determine the voxels that are likely to be close to a material transition area.

Optionally, at least two material transition models may be applied to the plurality of voxels in the image voxel data. In other words, it is optional to implement several models for different geometries, e.g. two-material transition, three-material transition, thin-wall embedded in another material, two-material-transition with a thin film of a third material, etc. It may be beneficial do the calculation as described for a given voxel i for all these models and select the best one, that is, the model with best fitting results.

In an example, as illustrated in step 160 of Fig. 1, an additional loop may be added that repeats steps a) to e) for other model(s). In other words, all voxels may be calculated with one material transition model, and then the calculation may be repeated for all voxels with another material transition model.

In another example (not shown), the calculation may be done for a given voxel with all material transition models, and then the calculation may be repeated for another voxel with all material transition models. In other words, an additional loop may be added to Fig. 1 that repeats steps b) to d) for other model(s).

Optionally, the computer-implemented method 100 may further comprises the step of determining a respective concentration value for each of the plurality of voxels (i) based on the classified material transition, if a valid fitting result is achieved for the respective voxel, or (ii) based on the classified material, if an invalid fitting result is achieved for the respective voxel.

Once the distance $d$ is known, the concentration of the two materials $c_{high}$ and $c_{low}$ in the voxel centered at position $r$ can be calculated as the convolution of the calculated concentration profile with a Gauss function of width $\tilde{\sigma}$ centered at position $r$:

$$c_{high}(\boldsymbol{r}) = \frac{1}{2} - \frac{1}{2}\operatorname{erf}\frac{d}{\sqrt{2}\tilde{\sigma}}$$

$$c_{low}(\boldsymbol{r}) = 1 - c_{high}(\boldsymbol{r}) = \frac{1}{2} + \frac{1}{2}\operatorname{erf}\frac{d}{\sqrt{2}\tilde{\sigma}}$$

The width can be chosen arbitrarily and may not need to be the same as the width of the point spread function of the scanner.

For each material, e.g., air, tissue, tagged faeces, a concentration image of the same size of the original CT image is created: $c_{air}$, $c_{tissue}$, and $c_{faeces}$. For each voxel $i$, it is decided, if the voxel belongs to a transition air-tissue, air-faeces, or tissue-faeces based on the distance $d$ and the $m_{high}(i)$ and $m_{low}(i)$ material parameters.

The corresponding concentrations have the following values:

$c_{air}(i) = c_{low}(i)$, $c_{tissue}(i) = c_{high}(i)$, and $c_{faeces}(i) = 0$ for the air-tissue transition,
$c_{air}(i) = c_{low}(i)$, $c_{tissue}(i) = 0$, and $c_{faeces}(i) = c_{high}(i)$ for the air-faeces transition, and
$c_{air}(i) = 0$, $c_{tissue}(i) = c_{low}(i)$, and $c_{faeces}(i) = c_{high}(i)$ for the air-faeces transition.

If an invalid fitting result is achieved for the respective voxel, the corresponding value in the concentration images is replaced by values of a pure material. If necessary use region growing methods to fill these areas.

The tissue concentration image $c_{tissue}$ represents the cleansed colon and can be visualized with Volume Rendering methods.

Images created by this method, such as model parameter images, fitting quality images, and derived quantity images, may be used to color the resulting surface mesh in order to visualize more information to the user.

Examples of the steps and intermediate results of this method are shown in Figs. 4A to 4E. These examples use a CT image of the abdomen as illustrated in Fig. 4A as input. Usually, the remaining faeces is tagged with iodine contrast agent prior to imaging.

Figs. 4B to 4D illustrate three model parameter images. In particular, Fig. 4B illustrates a distance image representative of the absolute value of the distance $d$ obtained after fitting a two-material transition model to the three-dimensional medical image illustrated in Fig. 4A. Fig. 4C illustrates an image representative of the value of $m_{low}$ obtained after fitting a two-material transition model to the three-dimensional medical image illustrated in Fig. 4A. Fig. 4D illustrates an image representative of the value of $m_{high}$ obtained after fitting a two-material transition model to the three-dimensional medical image illustrated in Fig. 4A.

Fig. 4E illustrates an optimality image representative of the value of the optimality for characterizing the fitting quality.

As can be seen from the images, even small structures like the folds are captured by the model fit.

The method described above may be extended for spectral CT. In spectral CT, e.g. with the Philips "IQon Spectral CT" it is possible to create synthesized monoenergetic images at different keV values. In other words, the at least one three-dimensional medical image may comprise synthesized monoenergetic images acquired at different energies. In these monoenergetic images, different materials show different contrast. Spectral CT has the potential to better discriminate different materials (e.g. faeces and tissue) than conventional CT. Spectral Virtual Colonoscopy may lead to a higher specificity of the screening even without bowel preparation.

With little variations, the method described above can take advantage of the additional information available from two or more CT with different spectral properties and that results in a more robust solution.

Turning to Fig. 1, in step 120, the behavior of the image intensities at material transitions in each of the synthesized monoenergetic images is modelled by a respective material transition model.

For example, in spectral CT, $n$ different spectral input images $I_i$ can be used with $n=2, 3,...$ and $i=1,..., n$. An example is dual-energy spectral CT with two monoergetic images $I_1$ at 45 KeV and $I_2$ at 125 KeV.

The material transition (e.g. two-material transition or three-material transition) is now modelled by $n$ different model functions $g_i(m_{i,high}, m_{i,low}, d, \boldsymbol{n}, \sigma)$ with $i=1,..., n$. The material parameters $m_{i,high}$, $m_{i,low}$ are different for each of the spectral image $I_i$ simultaneously, while the geometric parameters $d$, $n$, and $\sigma$ are the same. The model fitting is done to optimize to the matching of the model functions $g_i$ with all the spectral images $I_i$ simultaneously.

For each voxel $j$, the material parameters $m_{i,high}(j)$, $m_{i,low}(j)$ and the geometric parameters $d(j)$, $\boldsymbol{n}(j)$, $\sigma(j)$ can be obtained by fitting the $n$ material transition models to the image intensities of the local environment for each spectral image $I_i$.

Steps 130 to 150 do not change.

The method described above may be also extended for MRI, such as standard MRI or multi-parametric MRI.

The exemplary method illustrated in Fig. 1 may be directly applied to standard MRI.

For multi-parametric MR images, the at least one three-dimensional medical image comprises a sequence of multi-parametric MR images.

Turning to Fig. 1, in step 120, the behavior of the image intensities at material transitions in each of the multi-parametric MR images is modelled by a respective material transition model.

Similar to the above-mentioned spectral CT, the material transition (e.g. two-material transition or three-material transition) is also modelled by $n$ different model functions $g_i(m_{i,high}, m_{i,low}, d, \boldsymbol{n}, \sigma)$ with $i=1,..., n$. The material parameters $m_{i,high}$, $m_{i,low}$ are different for each of the multi-parametric MR images, while the geometric parameters $d$, $\boldsymbol{n}$, and $\sigma$ are the same. The model fitting is done to optimize to the matching of the model functions $g_i$ with all the multi-parametric MR images, simultaneously.

It will be appreciated that the above operation may be performed in any suitable order, e.g., consecutively, simultaneously, or a combination thereof, subject to, where applicable, a particular order being necessitated, e.g., by input/output relations. For example, steps a) to d) may be performed simultaneously for many voxels. In other words, steps a) to d) and step e) may be performed simultaneously or consecutively.

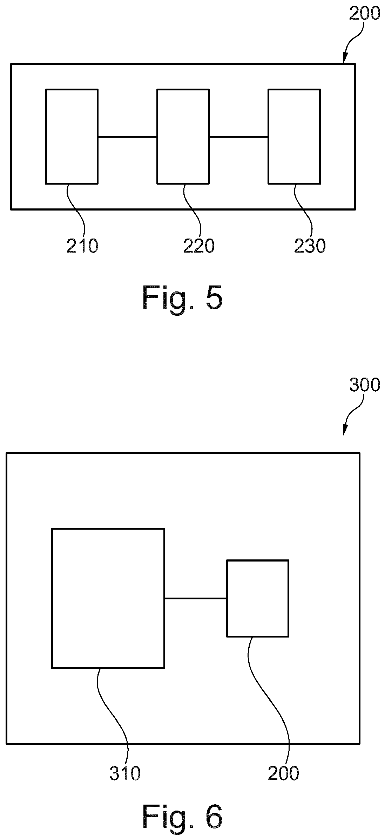

Fig. 5 schematically shows an example of an apparatus 200 for processing image voxel data representative of at least one three-dimensional medical image of an imaging modality of an object of interest to classify transitions between at least two materials in the object of interest.

The apparatus 200 may comprise an input unit 210, a processing unit 220, and an output unit 230. The input unit 210, the processing unit 220, and the output unit 230 may be a software, or hardware dedicated to running said software, for delivering the corresponding functionality. Each unit may be part of, or include an Application Specific Integrated Circuit (ASIC), an electronic circuit, a processor (shared, dedicated, or group) and/or memory (shared, dedicated, or group) that execute one or more software or firmware programs, a combinational logical circuit, and/or other suitable components that provide the described functionality.

The apparatus 200 may be any computing device, such as mobile devices, laptop and desktop computers, wearable computing devices, and other computing devices, suitable for processing image voxel data.

The input unit 210 is configured to receive image voxel data representative of at least one three-dimensional medical image of an imaging modality of an object of interest. Examples of the imaging modality may include, but are not limited to, CT and MRI.

The processing unit 220 is configured to perform the method steps described above.

The output unit 230 is configured to output a processing result e.g. to a display (for example, a built-in screen, a connected monitor or projector) or to a file storage (for example, a hard drive or a solid state drive).

Fig. 6 schematically shows a medical imaging system 300 according to some embodiments of the present disclosure.

The medical imaging system 300 comprises a scanner 310 configured to scan an object of interest to acquire at least one three-dimensional image of the object of interest. The scanner 310 may be a CT-scanner or an MRI scanner.

The medical imaging system 300 further comprises an apparatus 200 for processing image voxel data representative of the at least one three-dimensional image.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

**Claims**

1. A computer-implemented method (100) for processing image voxel data representative of at least one three-dimensional medical image of an imaging modality of an object of interest to classify transitions between at least two materials in the object of interest, comprising:

   a) selecting (110) a local environment around a voxel in the image voxel data;
   b) fitting (120) a material transition model to image intensities of the local environment of the voxel to estimate model parameters of the material transition model and to derive one or more quantities for characterizing a fitting quality of the model fit for the voxel, wherein the material transition model is constructed that corresponds to a behavior of the image intensities at material transitions;
   c) determining (130) whether a valid fitting result is achieved for the voxel based on at least one of the one or more derived quantities and the model parameters;
   d) classifying (140a) the voxel into one type of material transitions based on the estimated model parameters, if a valid fitting result is achieved for the voxel; or
   classifying (140b) the voxel into one of the at least two materials based on the estimated model parameters, if an invalid fitting result is achieved for the voxel; and
   e) repeating (150) steps a) to d) for a plurality of voxels in the image voxel data.

2. Method according to claim 1,
   wherein at least two material transition models are applied to the plurality of voxels in the image voxel data.

3. Method according to claim 1 or 2, further comprising:

   - determining a respective concentration value for each of the plurality of voxels (i) based on the classified material transition, if a valid fitting result is achieved for the respective voxel, or (ii) based on the classified material, if an invalid fitting result is achieved for the respective voxel; and
   - creating at least one concentration image for the at least two materials based on the determined concentration values of the plurality of voxels.

4. Method according to any one of the preceding claims,
   wherein the plurality of voxels are voxels that are likely to be close to a material transition area.

5. Method according to any one of the preceding claims,
   wherein the imaging modality comprises computed tomography, CT.

6. Method according to claim 5,
   wherein the at least one three-dimensional medical image comprises synthesized monoenergetic images acquired at different energies;
   wherein the behavior of the image intensities at material transitions in each of the synthesized monoenergetic images is modelled by a respective material transition model; and
   wherein each material transition model has same geometric parameters.

7. Method according to any one of the preceding claims,
   wherein the imaging modality comprises magnetic resonance, MR, imaging.

8. Method according to claim 7,
   wherein the at least one three-dimensional medical image comprises a sequence of multi-parametric MR images;
   wherein the behavior of the image intensities at material transitions in each of the multi-parametric MR images is modelled by a respective material transition model; and
   wherein each material transition model has same geometric parameters.

9. Method according to any one of the preceding claims, further comprising:

- removing effects of an undesired material of the at least two materials from the image voxel data based on a result of classification.

**10.** Method according to any one of the preceding claims,
wherein at least one of the following images is created:

- a model parameter image illustrative of the model parameters;
- a fitting quality image illustrate of the one or more derived quantity characterizing the fitting quality of the model fit; and
- one or more concentration images.

**11.** Method according to claim 10, further comprising:

- visualizing at least one of the created images.

**12.** Method according to any one of the preceding claims,
wherein the object of interest comprises a colon; and
wherein the at least two materials comprise gas, stool tagged with stool tagging agent, and tissue.

**13.** An apparatus (200) comprising a processor configured to perform the method steps of any one of claims 1 to 12.

**14.** A medical imaging system (300), comprising:

- a scanner (310) configured to scan an object of interest to acquire at least one three-dimensional image of the object of interest; and
- an apparatus according to claim 13 for processing image voxel data representative of the at least one three-dimensional image.

**15.** A computer program element configured, during execution, to perform the method steps of any one of claims 1 to 12.

100

a) | selecting a local environment around a voxel |
110

b) | fitting of a model |
120

160

repeating steps a) to e) with a different model

c)

valid fitting ?    no

130

140a

yes

140b

d) | material transition |    | pure material |

e) | repeating steps a) to d) for other voxels |
150

Fig. 1

**Fig. 2**

**Fig. 3**

Fig. 4A

Fig. 4B

Fig. 4C

Fig. 4D

Fig. 4E

Fig. 5

Fig. 6

Europäisches
Patentamt

European
Patent Office

Office européen
des brevets

**EUROPEAN SEARCH REPORT**

Application Number

EP 20 16 7664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Iwo Serlie ET AL: "Computed Cleansing for Virtual Colonoscopy Using a Three-Material Transition Model" In: "LECTURE NOTES IN COMPUTER SCIENCE", 1 January 2003 (2003-01-01), Springer Berlin Heidelberg, Berlin, Heidelberg, XP055096939, ISSN: 0302-9743 ISBN: 978-3-54-045234-8 vol. 2879, pages 175-183, DOI: 10.1007/978-3-540-39903-2_22, * abstract * * section 3 Method * | 1-15 | INV. G06T7/149 |
| A | LIHONG LI ET AL: "Image segmentation approach to extract colon lumen through colonic material tagging and hidden Markov random field model for virtual colonoscopy", PROCEEDINGS OF SPIE, IEEE, US, vol. 4683, 1 January 2002 (2002-01-01), pages 406-411, XP002421709, DOI: 10.1117/12.463607 ISBN: 978-1-62841-730-2 * the whole document * | 1-15 | |
| A | SERLIE I ET AL: "Probabilistic method for virtual colonoscopy cleansing", PROCEEDINGS OF SPIE; MEDICAL IMAGING 2003. PHYSIOLOGY AND FUNCTION: METHODS, SYSTEMS, AND APPLICATIONS, IEEE, US; SAN DIEGO, CA, USA, vol. 5031, 1 January 2003 (2003-01-01), pages 405-412, XP008166714, DOI: 10.1117/12.480403 ISBN: 978-1-62841-730-2 * the whole document * | 1-15 | TECHNICAL FIELDS SEARCHED (IPC) G06T |

-/--

The present search report has been drawn up for all claims

| Place of search | Date of completion of the search | Examiner |
|---|---|---|
| Munich | 15 September 2020 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 16 7664

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/206250 A1 (MCGINNIS RYAN [US] ET AL) 25 August 2011 (2011-08-25) * the whole document * | 1-15 | |
| A | SERLIEI ET AL: "Computed Cleansing for Virtual Colonoscopy Using a Three-Material Transition Model", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, vol. 2879, no. PART 2, 15 November 2003 (2003-11-15), pages 175-183, XP002382021, ISBN: 978-3-540-24128-7 * the whole document * | 1-15 | |
| A | ZHANG WEIDONG ET AL: "Fully automatic colon segmentation in computed tomography colonography", 2016 IEEE INTERNATIONAL CONFERENCE ON SIGNAL AND IMAGE PROCESSING (ICSIP), IEEE, 13 August 2016 (2016-08-13), pages 51-55, XP033081809, DOI: 10.1109/SIPROCESS.2016.7888222 [retrieved on 2017-03-27] * the whole document * | 1-15 | TECHNICAL FIELDS SEARCHED (IPC) |

The present search report has been drawn up for all claims

| Place of search | Date of completion of the search | Examiner |
|---|---|---|
| Munich | 15 September 2020 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 7664

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2020

| Patent document cited in search report | Publication date | Patent family member(s) | Publication date |
|---|---|---|---|
| US 2011206250 A1 | 25-08-2011 | NONE | |

EPO FORM P0459

For more details about this annex : see Official Journal of the European Patent Office, No. 12/82